# EUROPÄISCHE PATENTSCHRIFT

(11) **EP 2 596 154 B1**
(45) Veröffentlichungstag und Bekanntmachung des Hinweises auf die Patenterteilung: **15.11.2017**
(21) Anmeldenummer: 11723394.0
(22) Anmeldetag: 19.05.2011
(51) Int. Cl.: C25B 1/04, H01M 8/06, H01M 8/18, C01B 3/06, F17C 11/00, H01M 8/0606, H01M 8/0656, H01M 8/04014, H01M 8/04029, H01M 8/04082, H01M 8/124

(54) **ENERGIESPEICHERVORRICHTUNG UND VERFAHREN ZUM REVERSIBLEN SPEICHERN VON ENERGIE**
ENERGY STORAGE DEVICE AND METHOD FOR THE REVERSIBLE STORAGE OF ENERGY
DISPOSITIF DE STOCKAGE D'ÉNERGIE ET PROCÉDÉ DE STOCKAGE RÉVERSIBLE D'ÉNERGIE

(30) Priorität: 20.07.2010 DE 102010027690
(43) Veröffentlichungstag der Anmeldung: 29.05.2013
(73) Patentinhaber: Siemens Aktiengesellschaft, 80333 München (DE)
(72) Erfinder: ISE, Martin, 91058 Erlangen (DE); LANDES, Harald, 90607 Rückersdorf (DE)
(86) Internationale Anmeldenummer: PCT/EP2011/058136
(87) Internationale Veröffentlichungsnummer: WO 2012/010343

(56) Entgegenhaltungen:
- US-A- 5 492 777
- US-A1- 2005 037 245
- US-A1- 2007 196 702

## Beschreibung

Die Erfindung betrifft eine Energiespeichervorrichtung zum reversiblen Speichern von Energie, insbesondere aus regenerativen Energiequellen, sowie ein entsprechendes Verfahren.

Durch die immer größer werdende Nutzung von Energie aus regenerativen Energiequellen, beispielsweise aus Windenergie oder Solarenergie, sind Maßnahmen zur Speicherung von immer größeren Mengen der damit erzeugten Energiemengen notwendig. Da die Erzeugung elektrischer Energie aus regenerativen Quellen Wetterbedingungen unterliegt, wie beispielsweise der Wolkenbedeckung oder der Windstärke, schwankt die Erzeugung von elektrischer Energie und die Planbarkeit für die Verfügbarkeit der elektrischen Energie wird erheblich erschwert.

Um tägliche Schwankungen auszugleichen, als auch eine langfristige Speicherung wegen der jahreszeitlichen Schwankungen der Energieerzeugung aus regenerativen Quellen zu ermöglichen, ist eine Speicherung/Pufferung der erzeugten elektrischen Energie wünschenswert. Bisher wurde die elektrische Energie aus regenerativen Energiequellen aufgrund ihrer verhältnismäßig geringen Leistung in der Regel direkt in das Stromnetz eingespeist und gegebenenfalls hierfür konventionelle Kraftwerke dafür entsprechend gedrosselt, so dass eine Speicherung der erzeugten elektrischen Energie aus regenerativen Energiequellen nicht notwendig war. Für kleine Mengen erzeugter elektrischer Energie stehen hierfür bereits bekannte Batterien bzw. Akkumulatoren, genauer Blei- und Lithium-Ionen-Akkumulatoren oder NaS-Batterien, zur Verfügung.

Eine zusätzliche Form der Speicherung elektrischer Energie ist beispielsweise auch durch eine Elektrolyse gegeben, das heißt, ein fluider Stoff, beispielsweise Wasser, wird hierbei zumindest teilweise in seine Bestandteile zerlegt und zumindest ein Bestandteil wird gespeichert. Soll nun die gespeicherte Energie wieder abgerufen werden, reagieren zwei Bestandteile, umfassend den gespeicherten Bestandteil, zu dem ursprünglichen Stoff. Bei dieser Reaktion entsteht wiederum Energie, die dann, umgewandelt in elektrische Energie, in das Stromnetz bei entsprechendem Bedarf wieder eingespeist werden kann. Verwendung finden hier bisher die Niedertemperatur-Elektrolyseure mit alkalischen Elektrolyten oder Polymer-Elektrolytmembranen. Derartige Elektrolyseure weisen jedoch einen relativ niedrigen Wirkungsgrad auf. Zudem wird viel Energie für die Komprimierung des bei der Elektrolyse entstehenden Wasserstoffs benötigt, falls Wasser durch die Elektrolyse in seine Bestandteile zerlegt wird. So offenbart beispielsweise die US 5,492,777 eine Energiespeichervorrichtung mit den Merkmalen bzw. Schritten des Oberbegriffs des Anspruchs 1 und des Anspruchs 9. Diese Schrift lehrt insbesondere eine Energiespeichervorrichtung zum reversiblen Speichern von Energie, mit einem reversibel ausgebildeten Metall-/Metalloxidspeicher und eine räumlich reversibel ausgebildete Elektrolyse-Einrichtung, sowie Fluidaustauschmitteln zum Austauschen von fluiden Stoffen dazwischen.

Aufgabe der vorliegenden Erfindung ist es daher, eine Energiespeichervorrichtung zum reversiblen Speichern von Energie zur Verfügung zu stellen, welche die vorstehend genannten Nachteile beseitigt, insbesondere einen verbesserten Wirkungsgrad aufweist und gleichzeitig einfach und kostengünstig herstellbar ist. Diese Aufgabe wird durch eine Energiespeichervorrichtung nach Anspruch 1 und ein entsprechendes Verfahren nach Anspruch 9. Weitere vorteilhafter Ausführungsformen und Verbesserungen der Erfindung sind in den Unteransprüchen angegeben.

Gemäß einem Aspekt der Erfindung wird eine Energiespeichervorrichtung zum reversiblen Speichern von Energie, insbesondere aus regenerativen Energiequellen, vorgesehen, umfassend einen reversibel ausgebildeten Metall-/Metalloxidspeicher zum mittelbaren Speichern der Energie in Form zumindest eines fluiden Stoffes, eine reversibel ausgebildete Elektrolyse-Einrichtung zum Bereitstellen und Verwenden des fluiden Stoffes bei zumindest einer Elektrolyse-Reaktion, sowie Fluidaustauschmittel zum Austauschen von fluiden Stoffen zwischen dem reversibel ausgebildeten Metall-/Metalloxidspeicher und der Elektrolyse-Einrichtung, wobei insbesondere der Metall-/Metalloxidspeicher von der Elektrolyse-Einrichtung räumlich getrennt angeordnet ist.

Ein anderer Aspekt der Erfindung betrifft ein Verfahren zum reversiblen Speichern von Energie, insbesondere aus regenerativen Energiequellen, vorzugsweise geeignet zum Ablauf auf der voranstehend erwähnten Energiespeichervorrichtung, umfassend die Schritte:
Zuführen erzeugter elektrischer Energie, insbesondere hergestellt aus regenerativen Energiequellen, zu einer reversibel ausgebildeten Elektrolyse-Einrichtung, Erzeugen zumindest eines fluiden Stoffes durch Elektrolyse mittels der Elektrolyse-Einrichtung,
Speichern des fluiden Stoffes in einem insbesondere räumlich von der Elektrolyse-Einrichtung getrennten Metall-/Metalloxidspeicher,
Zuführen des zumindest einen gespeicherten fluiden Stoffes aus dem Metall-/Metalloxidspeicher zu der Elektrolyse-Einrichtung,
Erzeugen von elektrischer Energie anhand umgekehrter Elektrolyse mittels der Elektrolyse-Einrichtung mit dem zumindest einen fluiden Stoff, gelöst.

Vorteilhafterweise ist gemäß einem weiteren Aspekt der Erfindung der Metall-/Metalloxidspeicher als Eisen-/Eisenoxidspeicher und/oder die Elektrolyse-Einrichtung als Festoxid-Elektrolyse-Einrichtung ausgebildet. Der Vorteil dabei ist, dass bei der Ausbildung des Speichers als Eisen-/Eisenoxidspeicher dieser hinsichtlich bezogen auf die speicherbare Energiemenge kostengünstig ist, da der Preis für das Eisen-Rohmaterial niedrig ist. So kostet das Eisen-Rohmaterial nur ca. 0,3 EUR pro kW-Stunde. Gleichzeitig ist entsprechende Energiedichte sehr hoch, da pro drei Eisen-Atome bis zu vier Sauerstoffatome gebunden werden können, so dass bezogen auf das Volumen von reinen Fe₃O₄, ca. 70 % der Energiedichte von Erdöl erreicht werden können. Ist die Elektrolyse-Einrichtung als Festoxid-Elektrolyse-Einrichtung ausgebildet, kann die zu speichernde elektrische Energie der reversiblen Festoxid-Elektrolyse-Einrichtung effektiv genutzt werden, da beispielsweise eine Zersetzungsspannung für Wasserdampf bei hohen Temperaturen geringer ist als bei niedrigeren Temperaturen. Damit lässt sich bei einem auto-thermen Betrieb ein elektrischer Wirkungsgrad von bis zu 94 % bezogen auf eine Äquivalenzspannung entsprechend dem unteren Heizwert von gasförmigem Wasserstoff erreichen. Auf diese Weise lassen sich mindestens 50% der eingespeisten elektrischen Energie auch als energische Energie zurückgewinnen abzüglich etwaiger geringer Verluste durch Hilfsaggregate.

Zweckmäßigerweise sind gemäß einem noch weiteren Aspekt der Erfindung Wärmeaustauschmittel und/oder Wärmeerzeugungsmittel angeordnet, um Wärmeenergie zwischen dem Metall-/Metalloxidspeicher und der Elektrolyse-Einrichtung auszutauschen und/ oder um Wärme zum Betrieb der Energiespeichervorrichtung mit einer bestimmten Temperatur zur Verfügung zu stellen. Der Vorteil dabei ist, dass beispielsweise die beim Betrieb der Elektrolyse-Einrichtung als Brennstoffzelle, also im umgekehrten Elektrolyse-Betrieb, entstehende Wärme, dem Metall-/Metalloxidspeicher zugeführt werden kann, so dass gegebenenfalls lediglich eine Heizung benötigt wird, um den Metall-/Metalloxidspeicher zunächst auf Betriebstemperatur zu bringen; diese kann anschließend abgeschaltet werden, so dass es den Wirkungsgrad der Energiespeichervorrichtung weiter erhöht.

Vorteilhafterweise ist zudem ein Starthilfsmittel zum Starten der Energiespeichervorrichtung angeordnet, insbesondere ein Verdampfer, vorzugsweise ein Wasserverdampfer. Durch einen Verdampfer kann die Energiespeichervorrichtung sowohl im Speicherbetrieb, respektive Ladebetrieb, als auch im Bereitstellungsbetrieb, respektive Entladebetrieb, gestartet werden. Gleichzeitig kann das Starthilfsmittel auch dazu dienen, Leckageverluste zu kompensieren. Bei Verwendung eines Wasserverdampfers können so Leckageverluste der gasförmigen Stoffe Wasserdampf und Wasserstoff kompensiert werden.

Zweckmäßigerweise sind passive und/oder aktive Steuermittel für die Fluidaustauschmittel angeordnet zum Vorgeben einer Richtung für den Fluidaustausch. Die passiven und/oder aktiven Steuermittel sind zur Kontrolle der jeweiligen Fluidströme innerhalb der Energiespeichervorrichtung angeordnet. Auf diese Weise kann die Energiespeichervorrichtung sowohl im Speicher- als auch im Bereitstellungsbetrieb einfach und zuverlässig betrieben werden. Durch die Anordnung der passiven und/oder aktiven Steuermittel ist es möglich, eine Strömungsrichtung des fluiden Stoffes bzw. der fluiden Stoffe umzukehren, das heißt es wird eine homogenere Nutzung des Metall-/Metalloxidspeichers bzw. der reversiblen Elektrolyse-Einrichtung ermöglicht. Passive Steuermittel können beispielsweise Ventile, insbesondere Dreiwegeventile umfassen.

Zweckmäßigerweise umfassen die aktiven Steuermittel ein Gebläse, insbesondere ein Hochtemperatur-Gebläse. Der Vorteil dabei ist, dass dem fluiden Stoff nicht Wärme entzogen und anschließend wieder zugeführt werden muss bei einer Beförderung durch das Hochtemperaturgebläse. Außerdem wird eine mögliche Kondensation von Stoffen vermieden und so ein zuverlässiger Transport des gleichen Stoffes gewährleistet.

Vorteilhafterweise sind Abwärmenutzungsmittel, insbesondere für die Festoxid-Elektrolyse-Einrichtung vorgesehen zur Umwandlung von überschüssiger Abwärme in vorzugsweise elektrische Energie. Auf diese Weise ist es möglich, die bei einem umgekehrten Elektrolysebetrieb der Elektrolyse-Einrichtung entstehende überschüssige Abwärme zu nutzen. Damit kann der Gesamtwirkungsgrad der Energiespeichervorrichtung weiter erhöht werden.

Vorteilhafterweise liegt die Betriebstemperatur zumindest des Metall-/Metalloxidspeichers und/oder der Festoxid-Elektrolyse-Einrichtung oberhalb von ca. 500°C, insbesondere oberhalb von ca. 750°C, vorzugsweise im Bereich zwischen 800°C und 1000°C. Der Vorteil dabei ist, dass damit die Energiespeichervorrichtung bei ihrer optimalen Betriebstemperatur betrieben wird, so dass ein möglichst hoher Wirkungsgrad erreicht wird; die Effizienz der Energiespeichervorrichtung wird damit erheblich verbessert.

Weitere Vorteile und Merkmale der Erfindung ergeben sich aus der nachfolgenden Beschreibung von Ausführungsbeispielen anhand der Zeichnungen.

Dabei zeigt:
- Figur 1: in schematischer Form einen Aufbau einer Energiespeichervorrichtung gemäß einer ersten Ausführungsform der vorliegenden Erfindung;
- Figur 2: eine Energiespeichervorrichtung gemäß einer zweiten Ausführungsform der vorliegenden Erfindung; und
- Figur 3: ein Verfahren gemäß der ersten Ausführungsform der vorliegenden Erfindung.

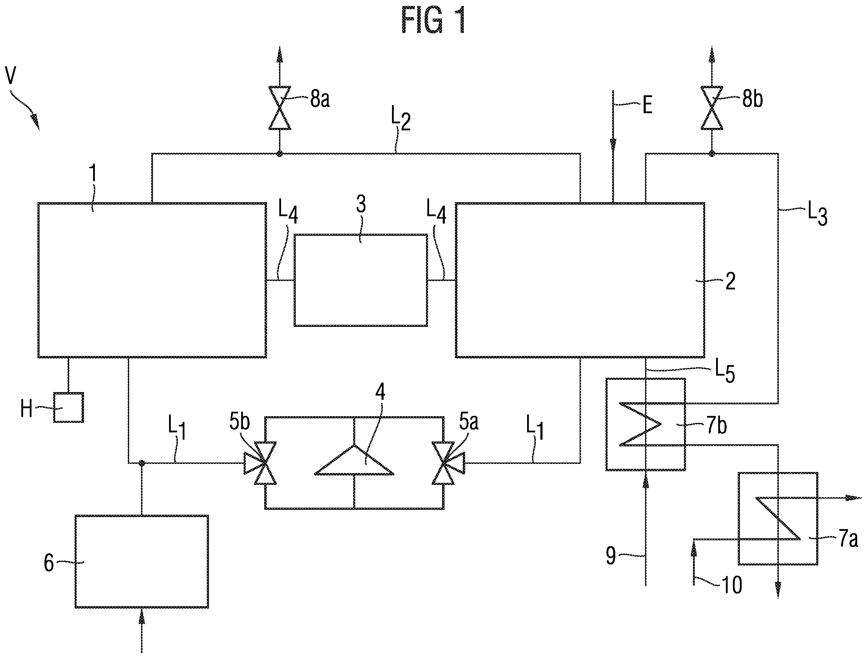

Fig. 1 zeigt in schematischer Form einen Aufbau einer Energiespeichervorrichtung gemäß einer ersten Ausführungsform der vorliegenden Erfindung.

In Fig. 1 bezeichnet Bezugszeichen V eine Energiespeichervorrichtung V gemäß der ersten Ausführungsform der vorliegenden Erfindung. Sie umfasst einen Metall-/Metalloxidspeicher 1 und eine Festoxid-Elektrolyseeinrichtung 2, die über Leitungen L₁, L₂ für einen Austausch von Fluiden, hier Wasserdampf bzw. gasförmiger Wasserstoff, miteinander verbunden sind. Zusätzlich sind in der Leitung L₁ ein Hochtemperatur-Gebläse 4 sowie stromab- bzw. aufwärts des Hochtemperaturgebläses 4 Dreiwegeventile 5a, 5b angeordnet. Das Hochtemperatur-Gebläse 4 sowie die Dreiwegeventile 5a, 5b dienen zur Steuerung der Richtung des durch die Leitungen L₁ und L₂ strömenden Fluids vom Metall-/Metalloxidspeicher 1 zur Festoxid-Elektrolyse-Einrichtung 2 bzw. umgekehrt.

An der Leitung L₂ ist ein Auskoppelungsventil 8a angeordnet, um Wasserstoffgas und/oder Wasserdampf auskoppeln zu können. Zusätzlich zur fluidischen Kopplung von Festoxid-Elektrolyse-Einrichtung 2 und Metall-/Metalloxidspeicher 1 mittels der Leitungen L₁, L₂ sind Wärmeaustauschmittel 3 angeordnet, die über Leitungen L₄ oder ähnliches einerseits mit der Festoxid-Elektrolyse-Einrichtung 2 und andererseits mit dem Metall-/Metalloxid-Speicher 1 zum Austausch von Wärme thermisch gekoppelt sind.

An der Leitung L₁ ist weiter ein Wasserverdampfer 6 angeordnet, der zum Einbringen von Wasserdampf in die Energiespeichervorrichtung V dient. Mittels des Wasserverdampfers 6 ist dann ein Starten der Energiespeichervorrichtung sowohl im Elektrolyse-Modus als auch im umgekehrten Elektrolyse- bzw. Entlade-Modus, respektive Lade-Modus, möglich. An der Festoxid-Elektrolyse-Einrichtung 2 ist eine weitere Leitung L₃ angeschlossen, die zum einen über ein weiteres Auskoppelventil 8b verfügt, um gasförmigen Sauerstoff auskoppeln zu können. Im weiteren Verlauf der Leitung L₃ mündet diese in einen ersten Wärmetauscher 7b, der für die Festoxid-Elektrolyse-Einrichtung 2 benötigte Luft 9 zuführt und bei dieser eine Temperaturerhöhung bewirkt. Stromabwärts des Wärmetauschers 7b ist ein weiterer Wärmetauscher 7a angeordnet, der zur Auskopplung überschüssiger Wärme aus der Energiespeichervorrichtung V dient. Hierzu strömt ein entsprechendes Wärmeträgermedium 10 durch den Wärmetauscher 7a.

Im Folgenden wird nun im Detail das Zusammenwirken der einzelnen Komponenten für einen Energiespeicher bzw. zum Abruf elektrischer Energie beschrieben:
Zum Starten der Energiespeichervorrichtung V, um von außen zugeführte elektrische Energie E zu speichern, wird zunächst der Wasserverdampfer 6 mit Energie beaufschlagt und darin befindliches bzw. diesem Verdampfer 6 zugeführtes flüssiges Wasser verdampft. Über die Leitungen L₁, die Ventile 5b, das Hochtemperaturgebläse 4, das Ventil 5a wird der Wasserdampf dann in die Festoxid-Elektrolyseeinrichtung 2 eingespeist. Dort wird dieser dann mittels der zugeführten elektrischen Energie E in Wasserstoff und Sauerstoff durch Elektrolyse zerlegt.

Der Sauerstoff wird dann über die Leitung L₃ abgeführt und kann zur weiteren Verarbeitung beispielsweise über das Ventil 8b abgegriffen werden. Bei diesem Elektrolysevorgang befindet sich die Festoxid-Elektrolyse-Einrichtung 2 auf einer Temperatur von ca. 900°C. Der Wasserstoff wird nun zusammen mit eventuellem Wasserdampf über die Leitungen L₂ gemäß Fig. 1 in den Eisen-/Eisenoxidspeicher 1 mittels des Hochtemperaturgebläses 4 sowie der Ventile 5a, 5b gefördert.

Um den Wasserstoff nun zu speichern, reagiert der Wasserstoff mit dem Eisenoxid des Eisen-/Eisenoxidspeichers 1, beispielsweise Fe₃O₄ + 4H₂ -> 3Fe + 4H₂O. Das so entstehende Wasser bzw. der Wasserdampf sind nun über die Leitung L₁, die Ventile 5b, 5a mittels des Gebläses 4 zur Festoxid-Elektrolyse-Einrichtung 2 transportiert, wobei dort das Wasser wiederum in Wasserstoff und Sauerstoff zerlegt wird.

Im umgekehrten Fall, d. h. um die Energie in Form des reduzierten Eisenoxids aus dem Eisen-/Eisenoxidspeicher 1 abzurufen, wird nun über den Wasserverdampfer 6 mittels des Hochtemperaturgebläses 4 und des Ventils 5b Wasserdampf in den Eisen-/Eisenoxidspeicher transportiert. Der dabei entstehende Wasserstoff wird mittels der Reaktion 3Fe + 4H₂O -> Fe₃O₄ + 4H₂ mittelbar über das Hochtemperaturgebläse 4 über die Leitung L₂ zur Festoxid-Elektrolyse-Einrichtung 2 transportiert. Über eine Leitung L₅ wird weiter Luft 9 zu der Festoxid-Elektrolyse-Einrichtung 2 transportiert; deren Sauerstoff reagiert dann mit dem Wasserstoff aus dem Eisen-/EisenoxidSpeicher 1 zu Wasser bzw. Wasserdampf. Der Wasserdampf wird über die Leitungen L₁, das Ventil 5a, das Gebläse 4, das Ventil 5b wiederum zum Eisen-/Eisenoxid-Speicher 1 transportiert, wo weiteres Eisen unter Bildung von Wasserstoff oxidiert wird.

Um Wärmeverluste möglichst gering zu halten, umfasst die Energiespeichervorrichtung V entsprechende Isolierungen. Um möglichst effektiv die Durchschnittstemperatur innerhalb der Vorrichtung homogen zu halten, ist eine thermische Kopplung zwischen dem Eisen-/Eisenoxid-Speicher 1 und der Festoxid-Elektrolyse-Einrichtung 2 in Form von Wärmeaustauschmitteln 3 und Leitungen L₄ angeordnet.

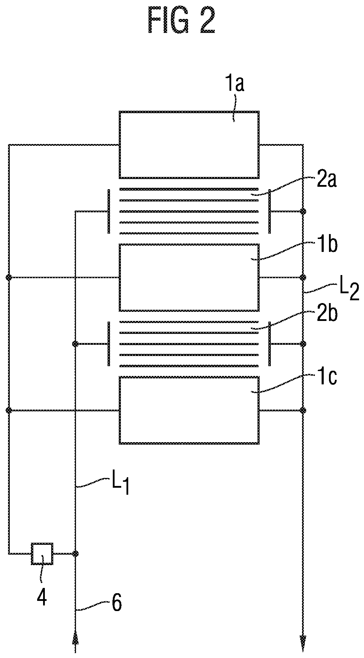

Fig. 2 zeigt eine Energiespeichervorrichtung gemäß einer zweiten Ausführungsform der vorliegenden Erfindung. In Fig. 2 ist schematisch eine Energiespeichervorrichtung V gezeigt, die aus mehreren Eisen-/Eisenoxid-Speichern 1a, 1b, 1c und mehreren Festoxid-Elektrolyse-Einrichtungen 2a, 2b besteht. Diese sind direkt benachbart und abwechselnd angeordnet. Der Wärmeaustausch zwischen den Eisen-/Eisenoxidspeichern 1a, 1b, 1c und den Festoxid-Elektrolyse-Einrichtungen 2a, 2b erfolgt dabei mittels Konvektion, Wärmeleitung und/oder Strahlung. Über eine gemeinsame Leitung L₁ sind die Festoxid-Elektrolyse-Einrichtungen 2a, 2b miteinander verbunden. Über die Leitungen L₁ kann dann analog zur Fig. 1 Wasserdampf den Festoxid-Elektrolyse-Einrichtungen 2a, 2b zugeführt werden, die den Wasserdampf bzw. das Wasser in Wasserstoff und Sauerstoff zerlegen. Der von den Festoxid-Elektrolyse-Einrichtungen 2a, 2b erzeugte Wasserstoff wird über eine gemeinsame Leitung L₂ von den Festoxid-Elektrolyse-Einrichtungen 2a, 2b den Eisen-/Eisenoxid-Speichern 1a, 1b, 1c zugeführt, wo der Wasserstoff in den Eisen-/Eisenoxid-Speichern 1a, 1b, 1c unter Bildung von Wasser gespeichert werden kann. Das so gebildete Wasser wird nun von den Eisen-/Eisenoxid-Speichern 1a, 1b, 1c über die gemeinsame Leitung L₁ wiederum den parallel geschalteten Festoxid-Elektrolyse-Einrichtungen 2a, 2b zugeführt. Das Verfahren bei Abruf der gespeicherten Energie aus dem Eisen-/Eisenoxid-Speicher 1a, 1b, 1c erfolgt dann entsprechend analog wie in Fig. 1 beschrieben. Ein Hochtemperaturgebläse 4 steuert dann dementsprechend die Flussrichtung des Wasserstoff- bzw. Wasserdampf-Stromes von/zu den Eisen-/ Eisenoxidspeichern 1a, 1b, 1c bzw. den Festoxid-Elektrolyse-Einrichtungen 2a, 2b.

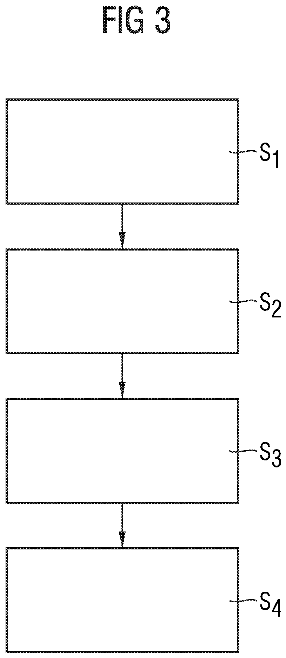

Fig. 3 zeigt ein Ablaufdiagramm eines Verfahrens gemäß dem Anspruch 9. Es umfasst die Schritte:
- Zuführen (S1) erzeugter elektrischer Energie zu einer reversibel ausgebildeten Elektrolyse-Einrichtung (2),
- Erzeugen (S2) zumindest eines fluiden Stoffes durch Elektrolyse mittels der Elektrolyse-Einrichtung (2),
- Speichern (S3) des fluiden Stoffes in einem insbesondere räumlich von der Elektrolyse-Einrichtung (2) getrennten Metall-/Metalloxidspeicher (1),
- Zuführen (S4) des zumindest einen gespeicherten fluiden Stoffes aus dem Metall-/Metalloxidspeicher (1) zu der Elektrolyse-Einrichtung (2),
- Erzeugen (S5) von elektrischer Energie anhand umgekehrter Elektrolyse mittels der Elektrolyse-Einrichtung mit dem zumindest einen fluiden Stoff.

Der Eisen-/Eisenoxid-Speicher kann aus fein strukturiertem Eisen- bzw. Eisenoxid-Teilchen bestehen, zum Beispiel kann er Partikel oder Drähte mit Durchmessern von ca. 0,01 bis 1 mm. Um ein gutes Durchströmen des Wasserstoffs bzw. des Wasserdampfes durch den Eisen- bzw. Eisenoxidspeicher zu gewährleisten, können diese mit einem fein strukturierten KeramikMaterial, beispielsweise Pulver oder Fasern aus Aluminiumtrioxid, versehen werden. Dies verhindert ebenfalls ein Zusammensintern der Partikel bzw. der Drähte. Weiterhin ist es möglich, die Mischung aus Partikeln und/oder Drähten zu einem porösen Gesamtkörper oder zu kleinen porösen Körpern, die als Schüttung eingebracht sind, zu sintern. Weiterhin ist es möglich, auch eine Heizung im Metall-/Metalloxidspeicher vorzusehen.

## Patentansprüche

1. Energiespeichervorrichtung (V) zum reversiblen Speichern von Energie, insbesondere aus regenerativen Energiequellen, wobei die Energiespeichervorrichtung (V) aufweist:
einen reversibel ausgebildeten Metall-/Metalloxidspeicher (1) zum mittelbaren Speichern der Energie in Form zumindest eines fluiden Stoffes,
eine reversibel ausgebildete Elektrolyse-Einrichtung (2) zum Bereitstellen und Verwenden des fluiden Stoffes bei zumindest einer Elektrolyse-Reaktion, sowie
Fluidaustauschmittel (L₁, L₂)zum Austauschen von fluiden Stoffen zwischen dem reversibel ausgebildeten Metall-/Metalloxidspeicher (1) und der Elektrolyse-Einrichtung (2), wobei der Metall-/Metalloxidspeicher (1) von der Elektrolyse-Einrichtung (2) räumlich getrennt angeordnet ist,
**gekennzeichnet dadurch, dass**
die Elektrolyse-Einrichtung (3) und der Metall-/Metalloxidspeicher (1) über Wärmeaustauschmittel (3, L₄) thermisch gekoppelt sind, um Wärmeenergie zwischen dem Metall-/Metalloxidspeicher (1) und der Elektrolyse-Einrichtung (2) auszutauschen.

2. Energiespeichervorrichtung gemäß Anspruch 1, **dadurch gekennzeichnet, dass** der Metall-/Metalloxidspeicher (1) als Eisen-/Eisenoxidspeicher und/oder die Elektrolyse-Einrichtung (2) als Festoxid-Elektrolyse-Einrichtung ausgebildet ist.

3. Energiespeichervorrichtung gemäß zumindest einem der Ansprüche 1 bis 2, **dadurch gekennzeichnet, dass** Wärmeerzeugungsmittel (H) angeordnet sind, um Wärme zum Betrieb der Energiespeichervorrichtung (V) mit einer bestimmten Temperatur zur Verfügung zu stellen.

4. Energiespeichervorrichtung gemäß zumindest einem der Ansprüche 1 bis 3, **dadurch gekennzeichnet, dass** ein Starthilfsmittel (6) zum Starten der Energiespeichervorrichtung (V) angeordnet ist, insbesondere ein Verdampfer, vorzugsweise ein Wasserverdampfer.

5. Energiespeichervorrichtung gemäß zumindest einem der Ansprüche 1 bis 4, **dadurch gekennzeichnet, dass** passive und/ oder aktive Steuermittel (4, 5a, 5b) für die Fluidaustauschmittel (L₁, L₂) zum Vorgeben einer Richtung für den Fluidaustausch vorgesehen sind.

6. Energiespeichervorrichtung gemäß Anspruch 5, **dadurch gekennzeichnet, dass** die aktiven Steuermittel (4) ein Gebläse, insbesondere ein Hochtemperaturgebläse aufweisen.

7. Energiespeichervorrichtung gemäß zumindest einem der Ansprüche 1 bis 6, **dadurch gekennzeichnet, dass** Abwärmenutzungsmittel (7a), insbesondere für die Elektrolyse-Einrichtung (2), zur Umwandlung von überschüssiger Abwärme in elektrische Energie vorgesehen sind.

8. Energiespeichervorrichtung gemäß zumindest einem der Ansprüche 1 bis 7, **dadurch gekennzeichnet, dass** eine Betriebstemperatur zumindest des Metall-/Metalloxidspeichers (1) und/oder der Elektrolyse-Einrichtung (2) oberhalb von ca. 500°C, insbesondere oberhalb von ca. 750°C, vorzugsweise in einem Bereich zwischen 800°C und 1000°C liegt.

9. Verfahren zum reversiblen Speichern von Energie, insbesondere aus regenerativen Energiequellen, welches zum Ablauf auf einer Energiespeichervorrichtung gemäß zumindest einem der Ansprüche 1 bis 8, geeignet ist und die folgenden Schritte aufweist:
Zuführen (S1) erzeugter elektrischer Energie zu einer reversibel ausgebildeten Elektrolyse-Einrichtung (2),
Erzeugen (S2) zumindest eines fluiden Stoffes durch Elektrolyse mittels der Elektrolyse-Einrichtung (2),
Speichern (S3) des fluiden Stoffes in einem räumlich von der Elektrolyse-Einrichtung (2) getrennten Metall-/Metalloxidspeicher (1),
Zuführen (S4) des zumindest einen gespeicherten fluiden Stoffes aus dem Metall-/Metalloxidspeicher (1) zu der Elektrolyse-Einrichtung (2), und
Erzeugen (S5) von elektrischer Energie anhand umgekehrter Elektrolyse mittels der Elektrolyse-Einrichtung (2) mit dem zumindest einen fluiden Stoff
**dadurch gekennzeichnet,**
**dass** Wärme zwischen der Elektrolyse-Einrichtung (2) und dem Metall-/Metalloxidspeicher (1) über eine thermische Kopplung der Elektrolyse-Einrichtung _(2) und dem Metall-/Metalloxidspeicher (1) über Wärmeaustauschmittel (3, L₄) ausgetauscht wird.

10. Verwendung eines Metall-/Metalloxidspeichers (1), insbesondere eines Eisen-/Eisenoxid-Speichers, welcher räumlich von einer Elektrolyse-Einrichtung (2), insbesondere einer Festoxid-Elektrolyse-Einrichtung, getrennt ist und welcher mit Wärmeaustauschmitteln (3, L₄) verbunden ist, um Wärmeenergie mit der Elektrolyse-Einrichtung (2) über eine thermische Kopplung der Elektrolyse-Einrichtung (2) und des Metall-/Metalloxidspeichers (1) über die Wärmeaustauschmittel (3, L₄) auszutauschen, zum reversiblen mittelbaren Speichern von Energie aus regenerativen Energiequellen, mittels zumindest eines fluiden Stoffes.

11. Vorrichtung nach Anspruch 1, **dadurch gekennzeichnet, dass** mehrere Speicher (1a, 1a) und mehrere Elektrolyseeinrichtungen (2a, 2b) vorgesehen sind, die abwechselnd zueinander angeordnet und parallel geschaltet sind, wobei der Wärmeaustausch mittels Konvektion, Wärmeleitung und/oder Strahlung erfolgt.

## Claims

1. Energy storage device (V) for the reversible storage of energy, in particular from renewable energy sources, wherein the energy storage device (V) has:
a reversibly designed metal/metal oxide store (1) for indirectly storing energy in the form of at least one fluid material,
a reversibly designed electrolysis device (2) for providing and using the fluid material in at least one electrolysis reaction, and
fluid exchanging means (L₁, L₂) for the exchange of fluid materials between the reversibly designed metal/metal oxide store (1) and the electrolysis device (2), wherein the metal/metal oxide store (1) is disposed spatially separated from the electrolysis device (2),
**characterised in that**
the electrolysis device (3) and the metal/metal oxide store (1) are thermally coupled via heat exchanging means (3, L₄) for exchanging thermal energy between the metal/metal oxide store (1) and the electrolysis device (2).

2. Energy storage device according to claim 1, **characterised in that** the metal/metal oxide store (1) is implemented as an iron/iron oxide store and/or the electrolysis device (2) as a solid oxide electrolysis device.

3. Energy storage device according to at least one of claims 1 to 2, **characterised in that** heat generating means (H) are arranged so as to provide heat for operating the energy storage device (V) at a particular temperature.

4. Energy storage device according to at least one of claims 1 to 3, **characterised in that** a starting aid (6) for starting the energy storage device (V) is provided, in particular an evaporator, preferably a water evaporator.

5. Energy storage device according to at least one of claims 1 to 4, **characterised in that** passive and/or active control means (4, 5a, 5b) for the fluid exchanging means (L₁, L₂) are provided for specifying a direction for the fluid exchange.

6. Energy storage device according to claim 5, **characterised in that** the active control means (4) have a blower, in particular a high-temperature blower.

7. Energy storage device according to at least one of claims 1 to 6, **characterised in that** waste heat utilisation means (7a) are provided, in particular for the electrolysis device (2), for converting excess waste heat into electrical energy.

8. Energy storage device according to at least one of claims 1 to 7, **characterised in that** the operating temperature of at least the metal/metal oxide store (1) and/or the electrolysis device (2) is above approximately 500°C, in particular above approximately 750°C, preferably in a range between 800 and 1000°C.

9. Method for the reversible storage of energy, in particular from renewable energy sources, which is suitable for execution on an energy storage device according to at least one of claims 1 to 8 and comprises the following steps:
feeding (S1) generated electrical energy to a reversibly designed electrolysis device (2),
producing (S2) at least one fluid material by electrolysis by means of the electrolysis device (2),
storing (S3) the fluid material in a metal/metal oxide store (1) that is spatially separated from the electrolysis device (2),
feeding (S4) the at least one stored fluid material from the metal/metal oxide store (1) to the electrolysis device (2), and
generating (S5) electrical energy by reverse electrolysis by means of the electrolysis device (2) using the at least one fluid material,
**characterised in that**
heat is exchanged between the electrolysis device (2) and the metal/metal oxide store (1) via a thermal coupling of the electrolysis device (2) and the metal/metal oxide store (1) via heat exchanging means (3, L₄).

10. Use of a metal/metal oxide store (1), in particular an iron/iron oxide store, which is spatially separated from an electrolysis device (2), in particular a solid oxide electrolysis device, and which is connected to the heat exchanging means (3, L₄) in order to exchange thermal energy with the electrolysis device (2) via a thermal coupling of the electrolysis device (2) and the metal/metal oxide store (1) via heat exchanging means (3, L₄), for the reversible indirect storage of energy from renewable energy sources, by means of at least one fluid material.

11. Device according to claim 1, **characterised in that** a plurality of stores (1a, 1a) and a plurality of electrolysis devices (2a, 2b) are provided, which are disposed alternately to one another and connected in parallel, wherein the heat exchange takes place by means of convection, thermal conduction and/or radiation.

## Revendications

1. Système (V) d'accumulation d'énergie pour accumuler de l'énergie de manière réversible, notamment de sources d'énergie renouvelables, le système (V) d'accumulation d'énergie comportant :
un accumulateur (1) métal/oxyde métallique, constitué de manière réversible, pour accumuler indirectement de l'énergie sous la forme d'au moins une substance fluide,
un dispositif (2) d'électrolyse, constitué de manière réversible, pour mettre à disposition et utiliser la substance fluide dans au moins une réaction d'électrolyse, ainsi que des moyens (L₁, L₂) d'échange de fluide, pour échanger des substances fluides entre l'accumulateur (1) métal/oxyde métallique, constitué de manière réversible, et le dispositif (2) d'électrolyse,
l'accumulateur (1) métal/oxyde métallique étant disposé d'une manière séparée dans l'espace du dispositif (2) d'électrolyse,
**caractérisé en ce que**
le dispositif (3) d'électrolyse et l'accumulateur (1) métal/oxyde métallique sont couplés thermiquement par des moyens (3, L₄) d'échange de chaleur afin d'échanger de l'énergie calorifique entre l'accumulateur (1) métal/oxyde métallique et le dispositif (2) d'électrolyse.

2. Système d'accumulation d'énergie suivant la revendication 1, **caractérisé en ce que** l'accumulateur (1) métal/oxyde métallique est constitué sous la forme d'un accumulateur fer/oxyde de fer et/ou le dispositif (2) d'électrolyse sous la forme d'un dispositif d'électrolyse à oxyde solide.

3. Système d'accumulation d'énergie suivant au moins l'une des revendications 1 à 2, **caractérisé en ce qu'**il est prévu des moyens (H) de production de chaleur pour mettre à disposition de la chaleur afin de faire fonctionner le système (V) d'accumulation d'énergie à une température déterminée.

4. Système d'accumulation d'énergie suivant au moins l'une des revendications 1 à 3, **caractérisé en ce qu'**il est prévu un moyen (6) d'aide au démarrage pour faire démarrer le système (V) d'accumulation d'énergie, notamment un évaporateur, de préférence un évaporateur d'eau.

5. Système d'accumulation d'énergie suivant au moins l'une des revendications 1 à 4, **caractérisé en ce qu'**il est prévu des moyens (4, 5a, 5b) passifs et/ou actifs de commande des moyens (L₁, L₂) d'échange de fluide pour prescrire un sens à l'échange de fluide.

6. Système d'accumulation d'énergie suivant la revendication 5, caractérisé en ce les moyens (4) actifs de commande comportent une soufflante, notamment une soufflante à haute température.

7. Système d'accumulation d'énergie suivant au moins l'une des revendications 1 à 6, **caractérisé en ce qu'**il est prévu des moyens (7a) d'utilisation de la chaleur perdue, notamment pour le dispositif (2) d'électrolyse, afin de transformer de la chaleur perdue en excès en énergie électrique.

8. Système d'accumulation d'énergie suivant au moins l'une des revendications 1 à 7, **caractérisé en ce qu'**une température de fonctionnement, au moins de l'accumulateur (1) métal/oxyde métallique et/ou du dispositif (2) d'électrolyse, est supérieure à environ 500°C, notamment supérieure à environ 750°C, de préférence dans une plage comprise entre 800°C et 1000°C.

9. Procédé d'accumulation réversible d'énergie, notamment de sources d'énergie renouvelables, qui est propre à se dérouler sur un système d'accumulation d'énergie suivant au moins l'une des revendications 1 à 8 et qui a les stades suivants :
apport (S1) d'énergie électrique produite à une dispositif (2) d'électrolyse, constitué de manière réversible,
production (S2) d'au moins une substance fluide par électrolyse, au moyen du dispositif (2) d'électrolyse,
accumulation (S3) de la substance fluide dans un accumulateur (1) métal/oxyde métallique, séparée dans l'espace du dispositif (2) d'électrolyse,
apport (S4) de la au moins une substance fluide accumulée de l'accumulateur (1) métal/oxyde métallique au dispositif (2) d'électrolyse et
production (S5) d'énergie électrique à l'aide d'une électrolyse inversée, au moyen du dispositif (2) d'électrolyse, par la au moins une substance fluide, **caractérisé**
**en ce que** l'on échange de la chaleur entre les dispositifs (2) d'électrolyse et l'accumulateur (1) métal/oxyde métallique, par un couplage thermique du dispositif (2) d'électrolyse et de l'accumulateur (1) métal/oxyde métallique, par l'intermédiaire de moyens (3, L₄) d'échange de chaleur.

10. Utilisation d'un accumulateur (1) métal/oxyde métallique, notamment d'un accumulateur fer/oxyde de fer, qui est séparé dans l'espace d'un dispositif (2) d'électrolyse, notamment d'un dispositif à oxyde solide et qui est relié à des moyens (3, L₄) d'échange de chaleur pour échanger, par les moyens (3, L₄) d'échange de chaleur, de l'énergie calorifique avec le dispositif (2) d'électrolyse, par un couplage thermique du dispositif (2) d'électrolyse et de l'accumulateur (1) métal/oxyde métallique afin d'accumuler indirectement, de manière réversible, de l'énergie de sources d'énergie renouvelables au moyen d'au moins une substance fluide.

11. Système suivant la revendication 1, **caractérisé en ce qu'**il est prévu plusieurs accumulateurs (1a, 1a) et plusieurs dispositifs (2a, 2b) d'électrolyse, qui sont montés en alternance les uns aux autres et en parallèle, l'échange de chaleur s'effectuant au moyen d'une convection, d'une conduction de la chaleur et/ou d'un rayonnement.
